# EUROPÄISCHE PATENTSCHRIFT

(11) **EP 1 058 673 B1**
(45) Veröffentlichungstag und Bekanntmachung des Hinweises auf die Patenterteilung: **14.04.2004**
(21) Anmeldenummer: 98945239.6
(22) Anmeldetag: 13.08.1998
(51) Int. Cl.: C01G 53/00, C01G 51/00, C01G 45/00, H01M 4/48

(54) **VERFAHREN ZUR HERSTELLUNG VON LITHIUM-ÜBERGANGSMETALLATEN**
METHOD FOR PRODUCING LITHIUM-TRANSITION METAL MIXTURES
PROCEDE DE PRODUCTION DE SELS DE MELANGES LITHIUM-METAUX DE TRANSITION

(30) Priorität: 09.02.1998 WO PCT/EP98/00697
(43) Veröffentlichungstag der Anmeldung: 13.12.2000
(73) Patentinhaber: H.C. Starck GmbH, 38642 Goslar (DE)
(72) Erfinder: BENZ, Mathias, D-51427 Bergisch Gladbach (DE); KUMMER, Wolfgang, D-38642 Goslar (DE); PROSS, Evelyn, D-79774 Albbruck (DE); SCHMOLL, Josef, D-38642 Goslar (DE); SCHWEDA, Wolfgang, D-38723 Rhüden (DE); DUFF, Daniel, D-51373 Leverkusen (DE); LEIBERICH, Ricarda, D-63225 Langen (DE); SCHILD, Christoph, D-51373 Leverkusen (DE); KRYNITZ, Ulrich, 38640 Goslar (DE); MESSE-MARKTSCHEFFEL, Juliane, 38640 Goslar (DE); STOLLER, Viktor, 38667 Bad Harzburg (DE)
(74) Vertreter: Peters, Frank M., Dr.
(86) Internationale Anmeldenummer: PCT/EP1998/005150
(87) Internationale Veröffentlichungsnummer: WO 1999/040029

(56) Entgegenhaltungen:
- EP-A- 0 643 430
- EP-A- 0 806 397
- WO-A-94/25398

## Beschreibung

Die vorliegende Erfindung betrifft ein Verfahren zur Herstellung von Lithium-Übergangsmetallaten der allgemeinen Formel

Liₓ(M¹ _{y}M² _{1-y})ₙO_{nz},

wobei
- M¹: Nickel, Cobalt oder Mangan bedeutet,
- M²: ein von M¹ unterschiedliches Übergangsmetall bezeichnet und Chrom, Cobalt, Eisen, Mangan, Molybdän und/oder Aluminium bedeutet,
- n: gleich 2 ist, falls M¹ Mangan ist und n gleich 1 ist, falls M¹ Nickel oder Cobalt ist, wobei
- x: einen Wert von 0,9 bis 1,2 annimmt,
- y: einen Wert zwischen 0,5 und 1 annimmt und
- z: einen Wert zwischen 1,9 und 2,1 annimmt.

Derartige Lithium-Übergangsmetallate werden als Elektrodenmaterial, insbesondere als Kathodenmaterial, für nicht-wäßrige Lithium-Sekundärbatteriesysteme, sogenannte Lithium-Ionenbatterien, eingesetzt.

Es hat bereits eine Vielzahl von Vorschlägen zur Herstellung derartiger Lithium-Übergangsmetallate gegeben, die aber überwiegend für eine großtechnische Herstellung nicht geeignet sind oder zu Produkten führen, die mangelhafte elektrochemische Eigenschaften aufweisen.

Durchgesetzt hat sich in den letzten Jahren die Verwendung von LiCoO₂, das aber durch die begrenzte Verfügbarkeit und den damit zusammenhängenden hohen Preis von Cobalt extrem teuer ist und damit für eine Massenproduktion (z.B. für den elektrischen Antrieb von Fahrzeugen) nicht infrage kommt. Deshalb gab es bereits intensive Bemühungen, LiCoO₂ als Kathodenmaterial z.B. durch LiNiO₂ und/oder LiMn₂O₄ ganz oder teilweise zu ersetzen.

Die Synthese der entsprechenden Kobalt-Verbindung LiCoO₂ gilt allgemein als unkritisch. Aufgrund der thermischen Stabilität von LiCoO₂ ist es bei diesem System sogar möglich, Kobaltcarbonat und Lithiumcarbonat direkt als Reaktionskomponenten bei relativ hohen Temperaturen umzusetzen, ohne daß im Endprodukt störende Carbonat-Gehalte verbleiben.

Die Übertragung dieser Methode auf LiNiO₂ wäre nur bei Temperaturen von 800 bis 900°C möglich. Derartig hohe Calcinationstemperaturen führen jedoch zu partiell zersetzten Lithiumnickelaten mit relativ geringer Speicherkapazität und/oder unbefriedigender Zyklenbeständigkeit.

Aus diesem Grund werden für die Herstellung von LiNiO₂ carbonatfreie Mischungen vorgeschlagen, bei denen als Nickelkomponente in den meisten Fällen β-Nickelhydroxid favorisiert wird, wie z.B. beschrieben in US-A 5 591 548, EP 0 701 293, J. Power Sources 54 (95) 209-213, 54 (95) 329-333 sowie 54 (95) 522-524. Darüber hinaus wurde auch der Einsatz von Nickeloxid in JP-A 7 105 950 oder Oxynickelhydroxid NiOOH in der DE-A 196 16 861 empfohlen.

Gemäß US-A 4 567 031 erfolgt die Präparation der innigen Mischung durch Copräzipitation von löslichen Lithium- und Übergangsmetallsalzen aus der Lösung, Trocknung der Lösung und Calcinierung. Hierbei werden bei vergleichsweise niedrigen Calcinierungstemperaturen und innerhalb vergleichsweise kurzer Zeiten relativ feinteilige Kristalle der Lithium-Übergangsmetallate erhalten. Die Zuordnung der Lithium- und Übergangsmetallionen zu den jeweiligen Schichten des Kristallgitters ist jedoch stark gestört, so daß Nickelionen in großem Umfang Lithiumschichtgitterplätze einnehmen. Derartige Kristalle haben unzureichende Eigenschaften im Hinblick auf ihren Einsatz als Elektroden in wiederaufladbaren Batterien. Andere Verfahren (EP-A 0 205 856, EP-A 0 243 926, EP-A 0 345 707) gehen von festen, feinteiligen Carbonaten, Oxiden, Peroxiden oder Hydroxiden der Ausgangsmetalle aus. Die innige Mischung wird durch gemeinsames Vermahlen der Ausgangsmetalle hergestellt. Die Bildung der Lithium-Übergangsmetallate erfolgt durch Festkörperdiffusion während der Calcination. Die Festkörperdiffusion erfordert vergleichsweise hohe Temperaturen bei vergleichsweise langen Calcinationszeiten und führte in der Regel nicht zu phasenreinen Lithiummetallaten mit hervorragenden elektronischen Eigenschaften. Umfangreiche Beobachtungen scheinen zu belegen, daß im Falle des Nickelsystems bei einer längeren Temperaturbehandlung oberhalb größenordnungsmäßig 700°C eine Zersetzung von LiNiO₂ unter Bildung von Li₂O und NiO beginnt.

Zur Intensivierung der innigen Mischung wurde daher bereits gemäß EP-A 0 468 942 vorgeschlagen, bei der Herstellung von Lithiumnickelat von pulverförmigem Nickeloxid oder -hydroxid auszugehen, das Pulver in einer gesättigten Lithiumhydroxidlösung zu suspendieren und der Suspension das Wasser durch Sprühtrocknen zu entziehen. Hierdurch soll die Calcinierungszeit bzw. -temperatur herabgesetzt werden können. Wegen der relativ geringen Löslichkeit von Lithiumhydroxid in Wasser ist die Homogenität dieser Mischung aber begrenzt.

Gemäß US-A 5 591 548 wird vorgeschlagen, eine pulverförmige, sauerstoffhaltige Übergangsmetallverbindung mit Lithiumnitrat zu vermahlen und anschließend unter Inertgas zu calcinieren. Der Vorteil dieses Verfahrens liegt in dem niedrigen Schmelzpunkt des Lithiumnitrats von 264°C, was dazu führt, daß die innige Mischung nach Erhitzen auf beispielsweise 300°C in Form einer Suspension der Übergangsmetallverbindungsteilchen in einer Lithiumnitratschmelze vorliegt, wodurch die Reaktion mit dem Festkörper begünstigt wird.

Nachteilig bei diesem Verfahren ist, daß während der Calcinierung freigesetzte Gase (H₂O, NOₓ, O₂) nicht oder nur sehr langsam aus der zähflüssigen Schmelzesuspension entweichen, so daß der für die Festkörperreaktion und Diffusion erforderliche innige Kontakt gestört wird und andererseits Konzentrationsinhomogenitäten im geometrischen Abstand nur weniger suspendierter Partikel auftreten. Entsprechend sind Unterbrechungen der Glühung und Zwischenmahlungen zur Homogenisierung der Reaktionsmasse erforderlich.

Es wäre demnach wünschenswert, die Calcination im bewegten Bett durchzuführen, wodurch die Freisetzung der während der Reaktion entstehenden Gase, die Produkthomogenität und die erforderliche Verweilzeit günstig beeinflußt würden. Dem Einsatz eines bewegten Betts steht aber der Einsatz niedrigschmelzender Lithiumverbindungen, wie Lithiumnitrat oder Lithiumhydroxid, entgegen, da diese intermediär mit der Übergangsmetallverbindung die erwähnte zähflüssige Schmelzesuspension bilden, aufgrund deren Ausbildung es im Zuge der Reaktion im bewegten Bett zu Verklebungen an den Begrenzungswänden des bewegten Bettes sowie zur Aufagglomeration des Produktes kommt.

Es wurde nun gefunden, daß die Aufagglomeration des Produktes und die Verklebung mit den Begrenzungswänden des bewegten Bettes vermieden werden können, wenn die Übergangsmetallverbindung in Form eines Pulvers mit einer spezifischen Oberfläche von mindestens 10 m²/g (BET) eingesetzt wird, wobei die Übergangsmetallverbindung mit großer spezifischer Oberfläche vor der Calcination mit der Lösung einer sauerstoffhaltigen Lithiumverbindung imprägniert und das Lösungsmittel durch Trocknen entfernt wird.

Aufgrund der hohen spezifischen Oberfläche ist das Übergangsmetallverbindungs-Pulver in der Lage, die Lithiumverbindung derart zu absorbieren, daß sich beim Erhitzen auf eine Temperatur oberhalb des Schmelzpunktes der Lithiumverbindung eine kontinuierliche Phase nicht ausbilden kann und ein Verkleben der mit der Lithiumverbindung überzogenen Übergangsmetallverbindungs-Pulver sowohl mit der Reaktorwand als auch der Pulverteilchen untereinander weitestgehend unterbleibt.

Gegenstand der vorliegenden Erfindung ist demgemäß ein Verfahren zur Herstellung von Lithium-Übergangsmetallaten der allgemeinen Formel

Liₓ(M¹ _{y}M² _{1-y})ₙO_{nz},

wobei
- M¹: Nickel, Cobalt oder Mangan bedeutet,
- M²: Chrom, Cobalt, Eisen, Mangan, Molybdän oder Aluminium bedeutet und ungleich M¹ ist,
- n: gleich 2 ist, falls M¹ Mangan ist, sonst 1 ist,
- x: eine Zahl zwischen 0,9 bis 1,2,
- y: eine Zahl zwischen 0,5 und 1,0 und
- z: eine Zahl zwischen 1,9 und 2,1 ist,
durch Calcinieren einer innigen Mischung von sauerstoffhaltigen Übergangsmetallverbindungen und einer sauerstoffhaltigen Lithiumverbindung, die durch Behandeln einer festen pulverförmigen Übergangsmetallverbindung mit einer Lösung der Lithiumverbindung und Trocknen erhalten wurde, das dadurch gekennzeichnet ist, daß zumindest die M¹-Übergangsmetallverbindung in Form eines Pulvers mit einer spezifischen Oberfläche von mindestens 10 m²/g (BET) eingesetzt wird und die Calcination in einem bewegten Bett durchgeführt wird.

Bevorzugte Ausführungsformen sind in den Ansprüchen 2 bis 9 offenbart.

Bevorzugt weist die M¹-Verbindung eine spezifische Oberfläche von mindestens 25 m²/g, insbesondere bevorzugt mindestens 40 m²/g, auf.

Als bevorzugte Übergangsmetallverbindungen M¹ werden die Hydroxide eingesetzt. Insbesondere bevorzugt ist Nickelhydroxid. Ganz besonders bevorzugt wird β-Nickelhydroxid mit einer spezifischen Oberfläche von 60 bis 80 m²/g eingesetzt, insbesondere ein solches, das nach US-A 5 391 265 erhältlich ist.

Im Falle, daß y kleiner als 1 ist, wird die M²-Übergangsmetallverbindung bevorzugt zumindest teilweise in Form eines Mischhydroxids der Formel (M¹_{y}M²_{1-y})(OH)₂ eingesetzt. Bevorzugt soll y größer 0,8, insbesondere bevorzugt größer 0,9, sein.

Als sauerstoffhaltige Lithiumverbindung können Lithiumhydroxid und/oder Lithiumnitrat eingesetzt werden. Diese werden bevorzugt in wäßriger Lösung mit der Übergangsmetallverbindung vermischt und anschließend getrocknet und granuliert. Als bevorzugte sauerstoffhaltige Lithiumverbindung wird Lithiumnitrat eingesetzt. Bevorzugt wird die wäßrige Lösung der Lithiumverbindung konzentriert eingesetzt, im Falle von Lithiumnitrat als mehr als 35%ige wäßrige Lösung.

Nach einer Variante des erfindungsgemäßen Verfahrens kann zumindest ein Teil der M²-Übergangsmetallverbindung als Lösungsbestandteil der Lösung der Lithiumverbindung zur Imprägnierung der M¹-Übergangsmetallverbindung eingesetzt werden.

Zur Herstellung der innigen Mischung wird die feste pulverförmige Übergangsmetallverbindung unter Rühren mit der Lösung der Lithiumverbindung vermischt und anschließend das Lösungsmittel, insbesondere Wasser, durch Sprühtrocknung, Wirbelschichtsprühgranulation oder einer Mischeragglomeration getrocknet. Bevorzugt ist ein sprühgetrocknetes Material mit einer Agglomeratgröße von weniger als 100 µm.

Die anschließende Calcination im bewegten Bett kann im Drehrohrofen, in einer Wirbelschicht oder im Fallschachtreaktor (downer) durchgeführt werden. Insbesondere bevorzugt ist der Einsatz eines Drehrohrofens.

Dabei wird das Granulat kontinuierlich oder batchweise in einen vorzugsweise elektrisch beheizten Drehrohrofen eingeführt und während einer Verweilzeit von 0,5 bis 10 Stunden, bevorzugt 1 bis 5 Stunden, bei einer Temperatur von 500 bis 800°C, vorzugsweise 550 bis 650°C, insbesondere bevorzugt 580 bis 620°C, behandelt.

Beim Aufheizen der innigen Mischung auf die Calcinierungstemperatur soll der Temperaturbereich von unterhalb der Schmelztemperatur der Lithiumverbindung bis zur Calcinierungstemperatur möglichst schnell durchschritten werden. Dementsprechend erfolgt der Eintrag der innigen Mischung in den bereits bei Calcinierungstemperatur befindlichen Drehrohrofen bzw. in das bei Calcinierungstemperatur befindliche bewegte Bett.

Im Falle, daß Lithiumnitrat als sauerstoffhaltige Lithiumverbindung eingesetzt wird, kann die innige Mischung auf eine Temperatur von bis zu 200°C, vorzugsweise 150 bis 180°C, vorgeheizt werden. Im Falle, daß Lithiumhydroxid eingesetzt wird, kann die Vorheizung bis auf eine Temperatur von 350°C erfolgen.

Die Calcination kann in einer Atmosphäre, die bis 50 % Sauerstoff enthält, beispielsweise Luft, durchgeführt werden. Bevorzugt ist eine Calcination, zumindest während zwei Dritteln der Calcinationszeit, unter im wesentlichen sauerstoffstoffreiem Inertgas, beispielsweise Argon, mit einem Sauerstoffgehalt von weniger als 5 %, insbesondere weniger als 3 %. In diesem Falle wird während der restlichen Calcinationszeit bevorzugt unter einer sauerstoffhaltigen Gasatmosphäre calciniert. Im Falle, daß das bewegte Bett im Batchbetrieb betrieben wird, kann die Atmosphäre nach Ablauf von mindestens zwei Dritteln der Calcinationszeit gegen eine sauerstoffhaltige Atmosphäre ausgetauscht werden. Im Falle eines kontinuierlich betriebenen Drehrohrs wird vorzugsweise im letzten Drittel des Ofens mittels einer Lanze sauerstoffhaltige Atmosphäre oder Sauerstoff in den Ofen eingeleitet.

Erfindungsgemäß ist es ferner möglich, die Nachcalcination unter sauerstoffhaltiger Atmosphäre in einem getrennten bewegten Bett durchzuführen.

Im Interesse einer engen Verweilzeitverteilung während der Calcination ist an sich der Batchbetrieb bevorzugt. Durch entsprechende querschnittsverengende Einbauten in das Drehrohr gelingt es jedoch, bei kontinuierlichem Drehrohrbetrieb ein ausreichend enges Verweilzeitspektrum mit einer Halbwertsbreite von weniger als einem Viertel der mittleren Verweilzeit zu realisieren.

Im Anschluß an die Calcination wird das pulverförmig aus dem bewegten Bett austretende Lithium-Übergangsmetallat auf Raumtemperatur (kleiner 100°C) abgekühlt und einer schonenden Mahlung unterzogen. Geeignete Mahlappararate sind beispielsweise solche, die die Scherwirkung hoher Gasgeschwindigkeitsprofile ausnutzen, wobei die Zerkleinerung durch Partikel-Partikel-Stoß erfolgt, wie Fließbettgegenstrahlmühlen oder Mikrowirbelmühlen. Die Mahlung erfolgt vorzugsweise (nach Abtrennung der Feinfraktion) bis zu einer mittleren Korngröße von 15 bis 25 µm Durchmesser. Nach einer besonders bevorzugten Ausführungsform der Erfindung wird die Feinfraktion der Mahlung entweder in das bewegte Bett zurückgeführt oder mit der pulverförmigen, sauerstoffhaltigen Übergangsmetallverbindung vermischt und anschließend gemeinsam mit der Lösung der sauerstoffhaltigen Lithiumverbindung behandelt und getrocknet, d.h. imprägniert.

Insbesondere bevorzugt wird Lithiumnitrat als sauerstoffhaltige Lithiumverbindung eingesetzt. Das in diesem Falle während der Calcination freigesetzte NOₓ-Gas wird bevorzugt in einer wäßrigen Lithiumhydroxid-Lösung absorbiert und die entstehende Lithiumnitrat-Lösung zur Imprägnierung der pulverförmigen Übergangsmetallverbindungen eingesetzt.

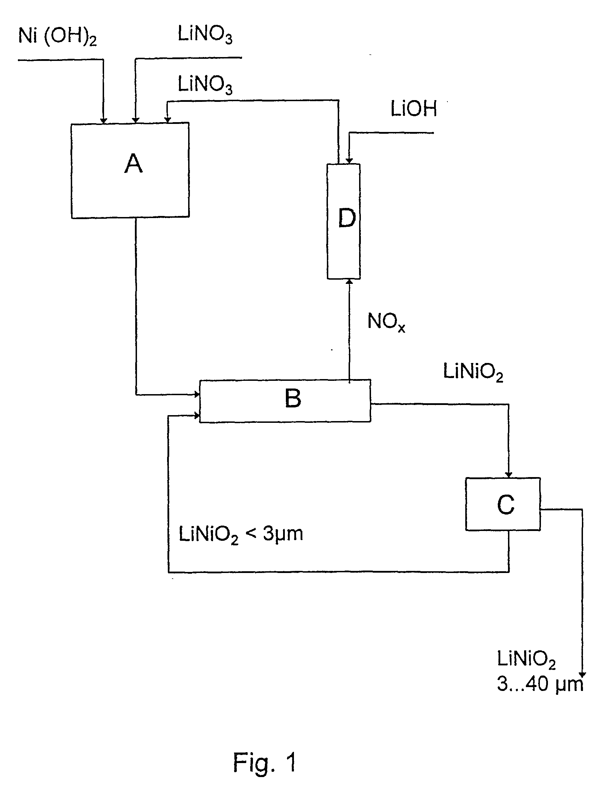

Fig. 1 zeigt schematisch eine bevorzugte Ausführungsform der vorliegenden Erfindung zur Herstellung von Lithiumnickelat. Die Premix-Herstellung A besteht aus einem Rührbehälter, in dem eine 40 %ige wäßrige Lithiumnitrat-Lösung vorgelegt wird, in die pulverförmiges β-Nickelhydroxid mit einer mittleren Teilchengröße von 10 µm und einer spezifischen Oberfläche von 65 m²/g eingerührt wird. Die erhaltene Aufschlämmung wird durch Sprühtrocknung getrocknet und als Granulat mit einem mittleren Teilchendurchmesser von etwa 100 µm in den Drehrohrofen B eingeleitet. Das Ofengut wird bevorzugt 1 bis 3 Stunden unter Inertgas bei Sintertemperatur gehalten. Anschließend kann (im Batch-Betrieb) die Argonatmosphäre durch eine 20 bis 50 % Sauerstoff enthaltende Atmosphäre ausgetauscht werden. Danach wird der Drehrohrofen abgekühlt und das erhaltene Lithiumnickelat in einer Fließbettgegenstrahlmühle C auf Teilchendurchmesser unter 40 µm gemahlen und die Feinfraktion mit Teilchengrößen unter 3 µm durch Sichtung bzw. im Zyklon abgetrennt und zur Rückrührung in den Ofen B gesammelt. Die NOₓ enthaltende Ofenatmosphäre wird in einem Wäscher D mit wäßriger Lithiumhydroxid-Lösung gewaschen und das erhaltende Lithiumnitrat für die erneute Premix-Herstellung gewonnen.

### Beispiele

### Beispiel 1

Ein stark poröses Nickelhydroxid mit einer spezifischen Oberfläche von ca. 65 m²/g BET wird in eine ca. 40%ige wäßrige Lösung von Lithiumnitrat eingerührt. Das molare Verhältnis von LiNO₃ zu Ni(OH)₂ beträgt 1,03. Die Suspension wird in einem Sprühturm getrocknet. Das getrocknete Pulver mit einer mittleren Korngröße von etwa 60 µm wird mit 5 Gew.-% Lithiumnickelat mit einer Korngröße <5 µm vermischt.

500 g der Pulvermischung werden in die heiße Zone eines auf 620°C geheizten Labordrehrohrofens, der von einem Stickstoffstrom mit einer Geschwindigkeit von 84 m/h durchströmt wird, gegeben. Der Drehrohrofen hat einen Innendurchmesser von 55 mm und wird mit 1/4 U/min rotiert.

Nach einer Stunde wird der Drehrohrofen auf kleiner 100°C abgekühlt und aus dem Ofen Proben entnommen.

Die Röntgenbeugungsanalyse ergibt folgende Peakverhältnisse:

| | |
|---|---|
| I₁₀₄/I₀₀₃ (LiNiO₂) | 0,76 |
| I₁₁₁(Li₂O)/I₁₀₁ (LiNiO₂) | 0,038 |
| | |
| Halbwertsbreite 003-Reflex | 0,17 |
| Halbwertsbreite 104-Reflex | 0,19 |

### Beispiel 2

Beispiel 1 wurde wiederholt mit der Abweichung, daß der Drehrohrofen bei 600°C gehalten wird und die Abkühlung nach zwei Stunden erfolgt.

Nach der Abkühlung entnommene Proben zeigen die folgenden Werte:

| | |
|---|---|
| I₁₀₄/I₀₀₃ (LiNiO₂) | 1,1 |
| I₁₁₁(Li₂O)/I₁₀₁ (LiNiO₂) | 0,1 |
| | |
| Halbwertsbreite 003-Reflex | 0,27 |
| Halbwertsbreite 104-Reflex | 0,25 |

Die Hauptmenge des Produktes wird im Drehrohrofen bei 620°C unter Luft 16 Stunden nachgeglüht. Danach ergeben sich folgende Werte der Röntgenbeugungsanalyse:

| | |
|---|---|
| I₁₀₄/I₀₀₃ (LiNiO₂) | 0,59 |
| I₁₁₁(Li₂O)/I₁₀₁ (LiNiO₂) | 0,003 |
| I₀₀₂(Li₂CO₃)/I₁₀₁ (LiNiO₂) | 0,009 |
| | |
| Halbwertsbreite 003-Reflex | 0,1 |
| Halbwertsbreite 004-Reflex | 0,13 |

### Beispiel 3

Beispiel 2 wurde wiederholt, wobei zunächst 2 Stunden bei 640°C unter Stickstoff und anschließend 30 Minuten bei 640°C unter Luft geglüht wurde.

Es wurden folgende Werte der Röntgenbeugungsanalyse erhalten:

| | |
|---|---|
| I₁₀₄/I₀₀₃ (LiNiO₂) | 0,76 |
| I₁₁₁(Li₂O)/I₁₀₁ (LiNiO₂) | 0,037 |
| I₀₀₂(Li₂CO₃)/I₁₀₁ (LiNiO₂) | 0,017 |
| | |
| Halbwertsbreite 003-Reflex | 0,17 |
| Halbwertsbreite 004-Reflex | 0,19. |

## Patentansprüche

1. Verfahren zur Herstellung von Lithium-Übergangsmetallaten der allgemeinen Formel
Liₓ(M¹ _{y}M² _{1-y})ₙO_{nz},
wobei
M¹ Nickel, Cobalt oder Mangan bedeutet,
M² Chrom, Cobalt, Eisen, Mangan, Molybdän oder Aluminium bedeutet und ungleich M¹ ist,
n gleich 2, falls M¹ Mangan ist, sonst 1 ist,
x eine Zahl zwischen 0,9 bis 1,2,
y eine Zahl zwischen 0,5 bis 1,0 und
z eine Zahl zwischen 1,9 bis 2,1 ist,
durch Calcinieren einer innigen Mischung von sauerstoffhaltigen Übergangsmetallverbindungen und einer sauerstoffhaltigen Lithiumverbindung, die durch Behandeln einer festen pulverförmigen Übergangsmetallverbindung mit einer Lösung der Lithiumverbindung und Trocknen erhalten wurde, **dadurch gekennzeichnet, daß** zumindest die M¹-Übergangsmetallverbindung in Form eines Pulvers mit einer spezifischen Oberfläche von mindestens 10 m²/g (BET) eingesetzt wird und die Calcination in einem bewegten Bett durchgeführt wird.

2. Verfahren nach Anspruch 1, **dadurch gekennzeichnet, daß** das Übergangsmetallat nach der Calcination gemahlen und gesiebt wird und. die Unterfraktion der Siebung in das bewegte Bett zurückgeführt wird.

3. Verfahren nach Anspruch 1 oder 2, **dadurch gekennzeichnet, daß** als M¹-Verbindung eine Misch-Übergangsmetallverbindung, die zumindest einen Teil der M²-Verbindung enthält, eingesetzt wird.

4. Verfahren nach einem der Ansprüche 1 bis 3, **dadurch gekennzeichnet, daß** die Lösung der Lithiumverbindung zumindest einen Teil der M²-Verbindung gelöst enthält.

5. Verfahren nach einem der Ansprüche 1 bis 4, **dadurch gekennzeichnet, daß** die Calcination im Drehrohr, in einer Wirbelschicht oder im Fallschachtreaktor durchgeführt wird.

6. Verfahren nach einem der Ansprüche 1 bis 5, **dadurch gekennzeichnet, daß** im Anschluß an die Calcination eine Mahlung und nach der Mahlung eine weitere Glühung in sauerstoffhaltiger Atmosphäre durchgeführt wird.

7. Verfahren nach einem der Ansprüche 1 bis 6, **dadurch gekennzeichnet, daß** als Lithiumverbindung LiNO₃ und M¹-Übergangsmetallverbindung Ni(OH)₂ eingesetzt wird.

8. Verfahren nach Anspruch 7, **dadurch gekennzeichnet, daß** das bei der Calcination freigesetzte NO₂ als Salpetersäure zurückgewonnen und mit LiOH zum LiNO₃ umgesetzt wird, das als Lithiumverbindung eingesetzt wird.

9. Verfahren nach einem der Ansprüche 1 bis 8, **dadurch gekennzeichnet, daß** die mit der Lösung einer Lithiumverbindung behandelte Übergangsmetallverbindung durch Sprühtrocknung oder Mischergranulation getrocknet wird.

## Claims

1. Process for preparing lithium transition metalates of the formula
Liₓ(M¹ _{y}M² _{1-y})ₙO_{nz}
where
M¹ is nickel, cobalt or manganese,
M² is chromium, cobalt, iron, manganese, molybdenum or aluminium and is different from M¹,
n is 2 when M¹ is manganese and is otherwise 1,
x is in the range from 0.9 to 1.2,
y is in the range from 0.5 to 1.0 and
z is in the range from 1.9 to 2.1,
by calcining an intimate mixture of oxygen-containing transition metal compounds and an oxygen-containing lithium compound, which has been obtained by treating a solid pulverulent transition metal compound with a solution of the lithium compound and drying it, **characterized in that** at least the M¹ transition metal compound is used in the form of a powder having a specific surface area of at least 10 m²/g (BET) and the calcination is carried out in a moving bed.

2. Process according to Claim 1, **characterized in that** the transition metalate is milled and sieved after the calcination and the undersize fraction from sieving is returned to the moving bed.

3. Process according to Claim 1 or 2, **characterized in that** the M¹ compound used is a mixed transition metal compound containing at least part of the M² compound.

4. Process according to any of Claims 1 to 3, **characterized in that** the solution of the lithium compound contains at least part of the M² compound in dissolved form.

5. Process according to any of Claims 1 to 4, **characterized in that** the calcination is carried out in a rotary tube, in a fluidized bed or in a downer.

6. Process according to any of Claims 1 to 5, **characterized in that** the calcination is followed by milling and the milling is followed by a further ignition in an oxygen-containing atmosphere.

7. Process according to any of Claims 1 to 6, **characterized in that** the lithium compound used is LiNO₃ and the M¹ transition metal compound used is Ni(OH)₂.

8. Process according to Claim 7, **characterized in that** the NO₂ liberated in the calcination is recovered as nitric acid and this is reacted with LiOH to form LiNO₃ which is used as lithium compound.

9. Process according to any of Claims 1 to 8, **characterized in that** the transition metal compound which has been treated with the solution of a lithium compound is dried by spray drying or mixer granulation.

## Revendications

1. Procédé de préparation de sels de lithium-métaux de transition de formule générale
Liₓ(M¹ _{y}M² _{1-y})ₙO_{nz},
dans laquelle
M¹ désigne le nickel, le cobalt ou le manganèse,
M² désigne le chrome, le cobalt, le fer, le manganèse, le molybdène ou l'aluminium et est différent de M¹,
n est égal à 2, si M¹ est le manganèse et, sinon, est égal à 1,
x est un nombre entre 0,9 et 1,2,
y est un nombre entre 0,5 et 1,0 et
z est un nombre entre 1,9 et 2,1,
par calcination d'un mélange intime de composés de métaux de transition contenant de l'oxygène et d'un composé de lithium contenant de l'oxygène qui a été obtenu par traitement d'un composé de métaux de transition pulvérulent solide avec une solution du composé de lithium et séchage, **caractérisé en ce qu'**au moins le composé de métal de transition M¹ est utilisé sous la forme d'une poudre d'une superficie spécifique d'au moins 10 m²/g (BET) et la calcination est réalisée dans un lit fluidisé.

2. Procédé selon la revendication 1, **caractérisé en ce que** le sel de métaux de transition est broyé et criblé après la calcination et la sous-fraction du criblage est réinjectée dans le lit fluidisé.

3. Procédé selon l'une des revendications 1 ou 2, **caractérisé en ce que** le composé M¹ utilisé est un composé mixte de métaux de transition qui contient au moins une partie du composé M².

4. Procédé selon l'une des revendications 1 à 3, **caractérisé en ce que** la solution du composé de lithium contient au moins une partie du composé M² dissous.

5. Procédé selon l'une des revendications 1 à 4, **caractérisé en ce que** la calcination est effectuée dans un tube rotatif, dans une couche fluidisée ou dans un réacteur à gravité.

6. Procédé selon l'une des revendications 1 à 5, **caractérisé en ce qu'**un broyage est effectué après la calcination et, après le broyage, une nouvelle calcination sous atmosphère oxygénée.

7. Procédé selon l'une des revendications 1 à 6, **caractérisé en ce que** le LiNO₃ est utilisé comme composé de lithium et le Ni(OH)₂ comme composé de métal de transition M¹.

8. Procédé selon la revendication 7 **caractérisé en ce que** le NO₂ libéré lors de la calcination est récupéré comme de l'acide nitrique et mis en réaction avec du LiOH pour former du LiNO₃ qui est utilisé comme composé de lithium.

9. Procédé selon l'une des revendications 1 à 8, **caractérisé en ce que** le composé de métal ou de métaux de transition traité avec la solution d'un composé de lithium est séché par séchage par pulvérisation ou par granulation en mélangeur.
